# FASCICULE DE BREVET EUROPEEN

(11) **EP 3 597 569 B1**
(45) Date de publication et mention de la délivrance du brevet: **12.03.2025**
(21) Numéro de dépôt: 19187065.8
(22) Date de dépôt: 18.07.2019
(51) Int. Cl.: B65G 15/00, B66F 3/40

(54) **PROCÉDÉ ET ENSEMBLE DE MAINTENANCE D'UN CONVOYEUR À BANDE**
VERFAHREN UND ANORDNUNG ZUR WARTUNG EINES BANDFÖRDERERS
METHOD AND ASSEMBLY FOR MAINTENANCE OF A CONVEYOR BELT

(30) Priorité: 20.07.2018 FR 1856765
(43) Date de publication de la demande: 22.01.2020
(73) Titulaire: Brunone, René, 27950 Saint Marcel (FR)
(72) Inventeur: BRUNONE, René, 27950 SAINT-MARCEL (FR)
(74) Mandataire: Lavoix

(56) Documents cités:
- WO-A2-2009/122230
- FR-A1- 2 658 495
- US-B1- 9 056 755

## Description

L'invention concerne en général la maintenance des convoyeurs à bande.

De tels convoyeurs à bande comprennent typiquement une bande transporteuse longitudinale et une pluralité de stations de support de la bande transporteuse, réparties le long de la bande.

Chaque station de support comporte un berceau, formé d'un ou plusieurs organes de support.

La bande transporteuse repose sur les organes de support, qui lui confèrent une forme déterminée, typiquement en auge profonde.

Les organes de supports sont typiquement des rouleaux ou des patins.

Il est nécessaire, périodiquement, de remplacer les organes de support, qui sont usés par le contact de la bande.

Une telle opération est peu commode, car l'opérateur doit soulever la bande pour démonter les organes de support et les séparer du châssis.

WO2009/122230A2 divulgue un procédé de maintenance d'un convoyeur à bande selon le préambule de la revendication 1, et un ensemble selon le préambule de la revendication 7.

Dans ce contexte, l'invention vise à faciliter la maintenance du convoyeur à bande.

Selon un premier aspect, l'invention porte sur un procédé de maintenance d'un convoyeur à bande selon la revendication 1.

Ainsi, le coussin gonflable permet de soulever la bande au-dessus de la station de support sur laquelle l'opération de maintenance doit être effectuée.

L'opérateur peut donc intervenir facilement sur la station de support, notamment pour le remplacement d'un des organes de support de la bande. Le coussin gonflable forme en quelque sorte un cric gonflable.

L'utilisation d'un coussin gonflable permet de caler de manière stable la bande, dans une position où elle n'a plus de contact avec la station de support.

Le soulèvement de la bande est donc obtenu facilement, sans nécessiter la mise en œuvre d'un système mécanique sophistiqué.

Le coussin gonflable peut être déplacé facilement le long de la bande transporteuse, pour assurer la maintenance en différents points du convoyeur.

Le procédé est économique, car il ne nécessite la mise en œuvre que de moyens simples et peu coûteux.

Le procédé de maintenance peut en outre présenter les caractéristiques des revendications dépendantes 2 à 6.

Selon un second aspect, l'invention porte sur un ensemble selon la revendication 7.

Cet ensemble peut en outre présenter les caractéristiques de la revendication 8.

D'autres caractéristiques ou avantages de l'invention ressortiront de la description détaillée qui en est donnée ci-dessous, à titre indicatif et nullement limitatif, en référence aux figures annexées, parmi lesquelles :
- la figure 1 est une représentation schématique de profil d'un ensemble conforme à l'invention, le coussin gonflable étant à l'état dégonflé ;
- la figure 2 est une vue de face d'une des stations de support de la figure 1 ;
- la figure 3 est une vue similaire à celle de la figure 1, le coussin gonflable étant dans son état gonflé ;
- les figures 4 et 5 sont des vues de côté et de face du dispositif de maintenance de la figure 1, le coussin gonflable étant représenté à l'état gonflé ; et
- la figure 6 est une vue similaire à celle de la figure 5, pour une variante de réalisation de l'invention.

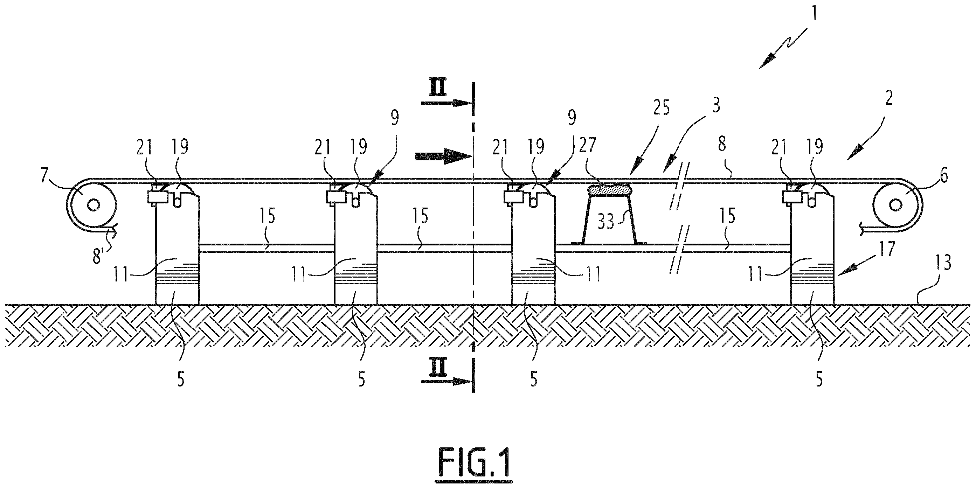

L'ensemble 1 représenté sur la figure 1 comprend un convoyeur à bande 2.

Ce convoyeur est typiquement destiné au transport de matériaux divisés, par exemple du sable ou des minerais issus d'une carrière.

Le convoyeur à bande 2 comporte une bande transporteuse longitudinale 3 et une pluralité de stations de support 5 de la bande transporteuse réparties le long de la bande.

La bande transporteuse 3 est repliée en boucle et engagée à ses extrémités autour de deux rouleaux de retournements 6, 7.

Typiquement, l'un des deux rouleaux est moteur pour assurer l'entrainement de la bande 3.

La bande 3 est ainsi divisée en un tronçon supérieur 8 de transport et un tronçon inférieur 8' de retour, qui n'est que partiellement représenté sur la figure 1.

Les stations 5 supportent la bande le long du tronçon supérieur 8, et également le long du tronçon inférieur 8'.

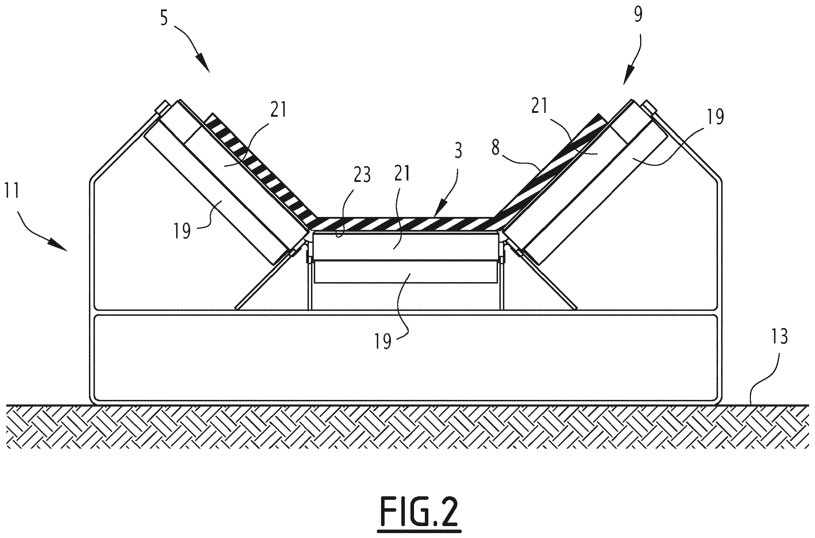

Chaque station de support 5 comprend un berceau 9 sur lequel repose la bande transporteuse 3 (voir figure 2). Elle comporte également un châssis de support 11, par l'intermédiaire duquel la station 5 repose sur le sol. Par exemple, les châssis 11 des différentes stations du support 5 sont structurellement raccordés les unes aux autres par des structures de liaison 15 comme représenté sur la figure 1. Les châssis 11 et les structures de liaison 15 constituent le châssis 17 du convoyeur.

Le berceau 9 comprend une pluralité d'organes de support 19, montés sur le châssis de support 11.

Les organes de support 19 sont typiquement des rouleaux montés rotatifs sur le châssis de support 11, ou des patins fixes par rapport au châssis de support 11.

Dans le cas de rouleaux, des protections anti-coincement 21, visibles sur la figure 2, masquent l'angle dit rentrant formé par la bande 3 et les rouleaux de support 19.

La bande transporteuse repose sur le berceau 9 de la station de support par une surface de support 23, typiquement tournée vers le bas.

Le berceau 9 est prévu à la fois pour supporter la bande transporteuse 3 et pour lui confirmer une forme déterminée, par exemple une forme d'auge profonde du type représentée sur la figure 2.

Pour ce faire, dans l'exemple représenté, la station de support comporte trois organes de support 19, disposées les uns à côté des autres transversalement. L'organe de support central 19 est sensiblement horizontal. Les deux autres organes de support 19 sont inclinés vers l'organe de support central.

Ainsi, la surface de support 23 présente en section transversale une forme déterminée quand la bande transporteuse 3 repose sur le berceau 9.

Cette forme est proche de la forme du berceau 9.

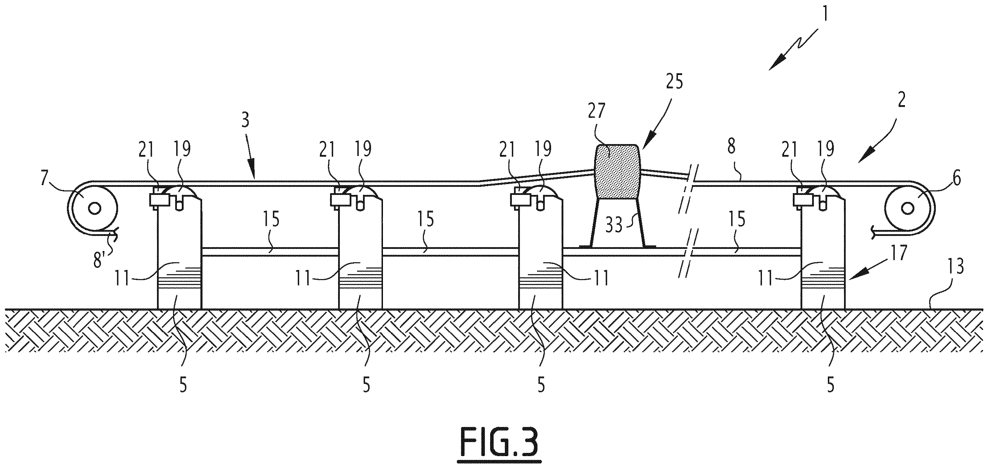

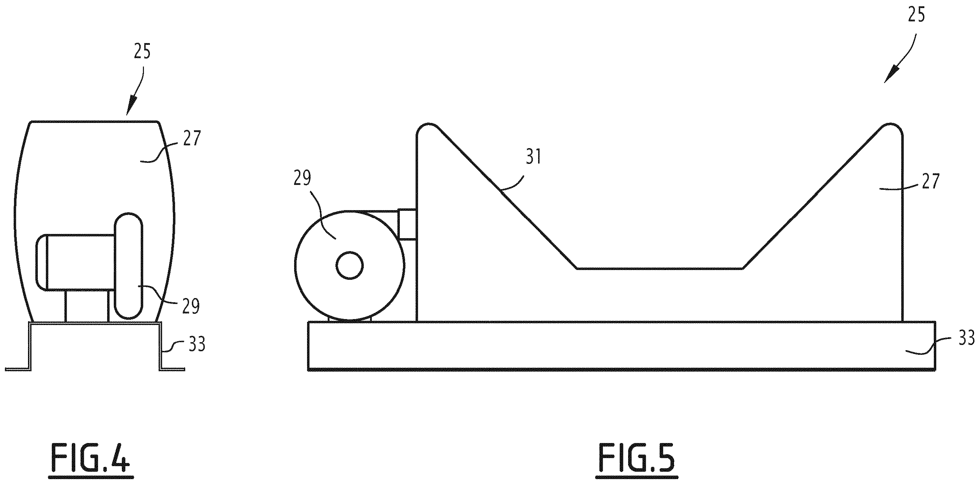

L'ensemble 1 comporte également un dispositif de maintenance 25, destiné à faciliter la maintenance du convoyeur à bande. Ce dispositif 25 est représenté de manière schématique sur les figures 1 et 3, et de manière plus détaillée sur les figures 4 et 5.

Le dispositif de maintenance 25 comporte :
- un coussin gonflable 27 susceptible d'adopter sélectivement un état gonflé et un état dégonflé ; et
- un organe de gonflage 29, agencé de manière à gonfler le coussin gonflable 27 jusqu'à son état gonflé.

Le coussin 27 est représenté à l'état dégonflé sur la figure 1, et à l'état gonflé sur les figures 3, 4 et 5.

Le coussin gonflable 27 est une poche étanche à l'air. Il est réalisé en tout matériau flexible adapté, par exemple en caoutchouc naturel ou de synthèse, en polyuréthane, ou en un tissu enduit et/ou étanche.

A l'état dégonflé, le coussin 27 présente la forme d'une galette de faible épaisseur, comme illustrée sur la figure 1.

Ainsi, le coussin gonflable 27 est configuré pour, à l'état dégonflé, être inséré sous la bande 3 dans une position de levage, à proximité d'une des stations de support 5, comme représenté sur la figure 1.

Par ailleurs, le coussin gonflable 27 est configuré pour, en position de levage et à l'état gonflé, soulever la bande transporteuse 3 de telle sorte que la bande transporteuse 3 repose directement sur le coussin gonflable 27 et ne repose plus sur le berceau 9 de la station de support 5. Une telle situation illustrée sur la figure 3.

Pour se faire, le coussin gonflable présente une surface d'appui 29 prévue pour venir porter contre la bande transporteuse 3 à l'état gonflé. La surface d'appui 31, à l'état gonflé et en absence de contrainte, présente en section transversale la même forme déterminée que la surface de support 23 de la bande transporteuse 3.

Dans l'exemple représenté, la surface d'appui 31 présente une forme d'auge profonde. On entend ici par « section transversale en l'absence de contrainte » la section de la surface d'appui 31 quand aucun effort extérieur n'est appliqué au coussin gonflable 27, la forme de la surface d'appui 31 résultant seulement de la pression à l'intérieur du coussin gonflable 27, cette pression étant nominale.

Du fait que la surface de support 23 de la bande 3 et la surface d'appui 31 du coussin gonflable 27 ont la même section transversale, le coussin gonflable 27 s'adapte facilement en dessous de la bande 3, et peut soulever celle-ci sans effort excessif, puisque l'effort appliqué par le coussin gonflable 27 n'entraîne pas de déformations marquées de la bande.

Ainsi, dans l'invention, la surface d'appui 31 adopte la même section transversale que la surface de support 23 seulement sans l'effet du gonflage. Aucune action mécanique n'est nécessaire.

L'organe de gonflage 29 est typiquement un ventilateur. En variante, l'organe de gonflage est une pompe électrique, une soufflerie, une pompe manuelle, ou tout autre dispositif permettant d'injecter un fluide dans le coussin gonflable.

L'utilisation d'un ventilateur est particulièrement avantageuse, car un tel équipement est peu coûteux et léger. Un compresseur pourrait également être utilisé s'il est nécessaire d'atteindre des pressions élevées à l'intérieur du coussin gonflable. Toutefois, ce type d'équipement est plus lourd qu'un ventilateur et plus coûteux.

Le coussin gonflable 27, à l'état gonflé, présente une pression comprise entre un bar absolu et trois bars absolus. Il s'agit ici de la pression interne du coussin gonflable 27.

La surface d'appui 31 s'étend sur toute la largeur transversale de la bande. Longitudinalement, elle s'étend sur une longueur comprise entre 10 cm et 1 m.

Le dispositif de maintenance 25 comporte encore un châssis 33 sur lequel sont montés le coussin gonflable 27 et l'organe de gonflage 29.

Par exemple, une face inférieure 35 du coussin gonflable, opposée à la surface d'appui 31, est adhérisée au châssis 33.

L'organe de gonflage 29 est rigidement fixé au châssis 33 par tous moyens adaptés.

Le châssis 33 est par exemple un profilé métallique en Oméga, du type représenté sur les figures 3 et 4.

En variant, il est de tout autre type.

Avantageusement, le dispositif de maintenance 25 est prévu pour être monté sur le châssis 17 du convoyeur à bande quand il est placé en position de levage, comme illustré sur la figure 1 et sur la figure 3.

L'invention porte également sur un procédé de maintenance d'un convoyeur à bande 2 comprenant une bande transporteuse longitudinale 3 et une pluralité de stations de support 5 de la bande transporteuse 3 réparties le long de la bande.

Ainsi, le procédé de maintenance est prévu pour le convoyeur à bande décrit plus haut.

Il est notamment prévu pour être réalisé avec le dispositif de maintenance 25 décrit plus haut.

Le procédé de maintenance comprend les étapes suivantes :
- insérer un coussin gonflable 27 dans un état dégonflé sous la bande 3, dans une position de levage à proximité d'une des stations de support 5 ;
- gonfler le coussin gonflable 27 jusqu'à un état gonflé dans lequel la bande transporteuse 3 repose directement sur le coussin gonflable 27 et ne repose plus sur le berceau 9 de ladite station de support 5 ;
- effectuer une opération de maintenance sur ladite station de support 5
- dégonfler le coussin gonflable 27 jusqu'à son état dégonflé.

Le coussin gonflable 27 est comme décrit ci-dessus relativement à l'ensemble 1.

Le coussin gonflable 27 est inséré sous la bande 3 de telle sorte que la surface d'appui 31 soit immédiatement sous la surface de support 23 de la bande. Il est orienté de telle sorte que le coussin gonflable 27, une fois dans son état gonflé, s'emboîte exactement sur la surface de support 23, du fait que la surface de support 23 et la surface d'appui 31 présentent la même section transversale.

Le coussin gonflable 27 est monté sur le châssis du convoyeur 17 en position de levage.

Le coussin gonflable 27 est gonflé par un organe de gonflage 29, comme décrit relativement à l'ensemble 1. Cet organe 29 est typiquement un ventilateur.

La position de levage est choisie suffisamment proche de la station de support 5 pour que, quand le coussin gonflable 27 est gonflé, la bande transporteuse 3 soit soulevée au-dessus du berceau 9 et ne repose plus sur celui-ci.

Une telle situation est illustrée sur la figure 3.

A l'étape de gonflage, l'organe de gonflage 29 est déclenché et envoie de l'air à l'intérieur du coussin gonflable 27. Celui-ci passe progressivement de son état dégonflé à son état gonflé.

Le coussin gonflable 27 et le ventilateur 29 sont montés sur un châssis 33, comme décrit ci-dessus.

Ils forment ainsi avantageusement un sous-ensemble portable d'une pièce.

Ils reposent sur le châssis de convoyeur 17 par l'intermédiaire du châssis 33.

A la fin de l'étape de gonflage, le coussin gonflable présente une pression interne comprise entre un bar absolu et trois bars absolus.

Le coussin gonflable 27 est maintenu dans son état gonflé pendant toute l'étape de maintenance sur la station de support 5. Les opérateurs ont donc accès facilement à la station de support et ne sont pas gênés par la bande 3.

L'étape de maintenance comprend typiquement une opération de remplacement d'un ou plusieurs organes de support 19. Elle peut comprendre d'autres opérations, par exemple des interventions sur d'autres éléments du berceau 9 ou sur le châssis 11.

Après la fin de l'étape de maintenance, le coussin gonflable 27 est dégonflé jusqu'à son état dégonflé. Ceci permet ensuite d'extraire le coussin gonflable de sa position de levage.

Le dispositif de maintenance peut ensuite être transporté à d'autres points du convoyeur à bande, pour effectuer d'autres opérations de maintenance.

La bande transporteuse 3 est à l'arrêt, c'est-à-dire immobile, pendant les étapes qui ont été décrites ci-dessus.

L'invention a été décrite ci-dessus avec un coussin gonflé par de l'air. En variante, le coussin est gonflé avec un autre gaz. Selon une autre variante, le coussin est gonflé par un liquide tel que de l'eau.

L'invention a été décrite avec un coussin gonflable dont la surface d'appui présente la même section transversale que la surface de support de la bande. Selon une variante non couverte par les revendications, la surface d'appui a une autre forme. Par exemple, elle a la forme d'un boudin tubulaire transversal, ou toutes autres formes adaptées.

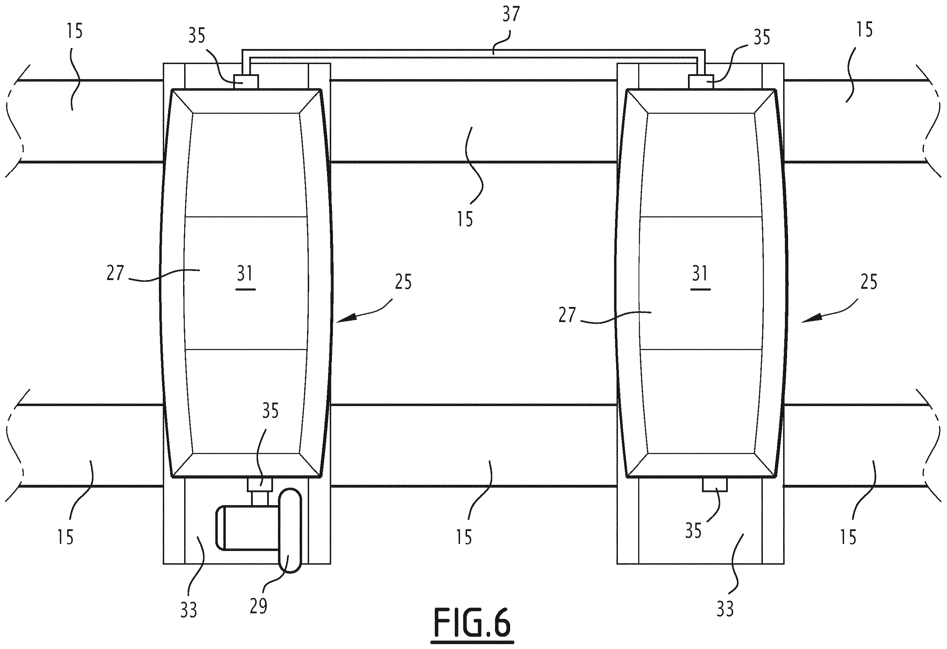

Selon une variante de réalisation illustrée sur la figure 6, le dispositif de maintenance 25 comprend deux coussins gonflables 27.

Ces coussins 27 sont de préférence identiques l'un à l'autre et sont orientés de la même façon.

Les deux coussins gonflables 27 sont montés sur deux châssis 33 indépendants. En variante, ils sont montés sur le même châssis 33.

Les deux coussins 27 présentent chacun deux orifices 35 mettant en communication le volume interne du coussin avec l'extérieur.

L'orifice 35 d'un premier des deux coussins 27 est raccordé fluidiquement à un des orifices 35 du second coussin 27 par un conduit 37. Le conduit 37 est de préférence amovible. L'autre orifice 35 du premier coussin est raccordé au refoulement de l'organe de gonflage 29. L'autre orifice 35 du second coussin 27 est obturé par un bouchon non représenté.

Ainsi, quand le conduit 37 est branché sur les orifices 35, l'organe de gonflage 29 permet de gonfler les deux coussins 27 à la fois.

Les deux coussins 27 sont agencés de manière à pouvoir être mis en place de part et d'autre d'une station de support 5, à l'état dégonflé, dans des positions de levage respectives. A l'état gonflé des deux coussins gonflables 27, la bande transporteuse 3 repose directement sur les deux coussins gonflables 27 et ne repose plus sur le berceau 9 de la station de support 5.

Un tel agencement est particulièrement adapté pour les bandes transporteuse très lourdes, ou pour un convoyeur à bande arrêté en charge, c'est-à-dire avec des produits sur la bande transporteuse.

Il permet également d'assurer une maintenance plus rapide, car le berceau 9 de la station de support 5 est bien dégagé et accessible quand la bande est soulevée des deux côtés.

En variante, plusieurs coussins 27 sont placés de chaque côté de la station de support 5, par exemple deux coussins de chaque côté, ou trois coussins, ou plus de trois coussins.

En variante, plusieurs coussins 27 sont placés à côté de plusieurs stations de support 5 consécutives, par exemple un coussin ou plus par station pour deux stations de support 5 ou plus. Ceci permet la maintenance simultanée de deux stations supports ou plus, une fois que les coussins sont gonflés.

Tous les coussins 27 sont raccordés fluidiquement les uns aux autres comme décrit en référence à la figure 6, par des conduits 37. Un seul organe de gonflage 29 permet de gonfler tous les coussins 27 à la fois.

Alternativement, tous les coussins 27 placés d'un même côté de la station de support 5 sont raccordés fluidiquement les uns aux autres comme décrit en référence à la figure 6, par des conduits 37. Deux organes de gonflage 29 sont suffisants pour gonfler tous les coussins 27.

## Revendications

1. Procédé de maintenance d'un convoyeur à bande (2) comprenant une bande transporteuse (3) longitudinale et une pluralité de stations de support (5) de la bande transporteuse (3) réparties le long de la bande transporteuse (3), chaque station de support (5) comprenant un berceau (9) sur lequel la bande transporteuse (5) repose par une surface de support (23), le procédé comprenant les étapes suivantes :
- insérer un coussin gonflable (27) dans un état dégonflé sous la bande transporteuse (3), dans une position de levage à proximité d'une des stations de support (5) ;
- gonfler le coussin gonflable (27) jusqu'à un état gonflé dans lequel la bande transporteuse (3) repose directement sur le coussin gonflable (27) et ne repose plus sur le berceau (9) de ladite station de support (5) ;
- effectuer une opération de maintenance sur ladite station de support (5) ;
- dégonfler le coussin gonflable (27) jusqu'à son état dégonflé ;
ladite surface de support (23) ayant en section transversale une forme déterminée quand la bande transporteuse (3) repose sur le berceau (9) de ladite station de support (5), le coussin gonflable (27) ayant une surface d'appui (31) prévue pour venir porter contre la bande transporteuse (3) à l'état gonflé, **caractérisé en ce que** ladite surface d'appui (31) a à l'état gonflé, en l'absence de contrainte, ladite section déterminée, ladite section déterminée en l'absence de contrainte étant la section de la surface d'appui (31) quand aucun effort extérieur n'est appliqué au coussin gonflable (27), la forme de la surface d'appui (31) résultant seulement de la pression à l'intérieur du coussin gonflable (27), cette pression étant nominale.

2. Procédé de maintenance selon la revendication 1, dans lequel le berceau (9) comprend plusieurs organes de support (19) de la bande transporteuse (3), l'opération de maintenance comprenant le remplacement d'au moins un des organes de support (19).

3. Procédé de maintenance selon l'une quelconque des revendications précédentes, dans lequel le coussin gonflable (27) est gonflé par un ventilateur (29).

4. Procédé de maintenance selon la revendication 3, dans lequel le coussin gonflable (27) et le ventilateur (29) sont montés sur un châssis (33) et forment ainsi un sous-ensemble portable d'une pièce.

5. Procédé de maintenance selon l'une quelconque des revendications précédentes, dans lequel le coussin gonflable (27), à l'état gonflé, présente une pression comprise entre 1 bar absolu et 3 bars absolus.

6. Procédé de maintenance selon l'une quelconque des revendications précédentes, dans lequel le convoyeur à bande (2) comprend un châssis de convoyeur (17), le coussin gonflable (27) étant monté sur le châssis de convoyeur (17) en position de levage.

7. Ensemble (1) comprenant :
- un convoyeur à bande (2) comprenant une bande transporteuse (3) longitudinale et une pluralité de stations de support (5) de la bande transporteuse (3) réparties le long de la bande transporteuse (3), chaque station de support (5) comprenant un berceau (9) sur lequel la bande transporteuse (3) repose par une surface de support (23) ; et
- un dispositif de maintenance (25) du convoyeur à bande (2), le dispositif de maintenance (25) comprenant :
- un coussin gonflable (27) susceptible d'adopter sélectivement un état dégonflé et un état gonflé ;
- un organe de gonflage (29), agencé de manière à gonfler le coussin gonflable (27) jusqu'à son état gonflé ;
le coussin gonflable (27) étant configuré pour, à l'état dégonflé, être inséré sous la bande transporteuse (3) dans une position de levage à proximité d'une des stations de support (5) ;
le coussin gonflable (27) étant configuré pour, en position de levage et à l'état gonflé, soulever la bande transporteuse (3) de telle sorte que la bande transporteuse (3) repose directement sur le coussin gonflable (27) et ne repose plus sur le berceau (9) de ladite station de support (5) ;
ladite surface de support (23) ayant en section transversale une forme déterminée quand la bande transporteuse (3) repose sur le berceau (9) de ladite station de support (5), le coussin gonflable (27) ayant une surface d'appui (31) prévue pour venir porter contre la bande transporteuse (3) à l'état gonflé,
**caractérisé en ce que** ladite surface d'appui (31) ayant à l'état gonflé, en l'absence de contrainte, ladite section déterminée, ladite section déterminée en l'absence de contrainte étant la section de la surface d'appui (31) quand aucun effort extérieur n'est appliqué au coussin gonflable (27), la forme de la surface d'appui (31) résultant seulement de la pression à l'intérieur du coussin gonflable (27), cette pression étant nominale.

8. Ensemble selon la revendication 7, dans lequel le dispositif de maintenance (25) comprend un châssis (33) sur lequel sont montés le coussin gonflable (27) et l'organe de gonflage (29), formant ainsi sous-ensemble portable d'une pièce.

## Patentansprüche

1. Verfahren zur Wartung eines Bandförderers (2), umfassend ein längsgerichtetes Förderband (3) und eine Vielzahl von Trägerstationen (5) des Förderbands (3), die entlang des Förderbands (3) verteilt sind, jede Trägerstation (5) umfassend eine Wiege (9), auf der das Förderband (5) mit einer Trägerfläche (23) aufliegt, das Verfahren umfassend die folgenden Schritte:
- Einfügen eines Luftkissens (27) in einem nicht aufgeblasenen Zustand unter das Förderband (3) in einer Hebeposition in der Nähe einer der Trägerstationen (5);
- Aufblasen des Luftkissens (27) bis zu einem aufgeblasenen Zustand, in dem das Förderband (3) direkt auf dem Luftkissen (27) aufliegt und nicht mehr auf der Wiege (9) der Trägerstation (5) aufliegt;
- Durchführen einer Wartungsarbeit an der Trägerstation (5);
- Entleeren des Luftkissens (27) bis zu seinem entleerten Zustand;
wobei die Trägerfläche (23) im Querschnitt eine bestimmte Form aufweist, wenn das Förderband (3) auf der Wiege (9) der Trägerstation (5) aufliegt, wobei das Luftkissen (27) eine Auflagefläche (31) aufweist, die bereitgestellt ist, um in dem aufgeblasenen Zustand gegen das Förderband (3) zu drücken,
**dadurch gekennzeichnet, dass** die Auflagefläche (31) im aufgeblasenen Zustand bei fehlender Beanspruchung den bestimmten Querschnitt aufweist, wobei der bei fehlender Beanspruchung bestimmte Querschnitt der Querschnitt der Auflagefläche (31) ist, wenn keine äußere Kraft auf das Luftkissen (27) ausgeübt wird, wobei die Form der Auflagefläche (31) nur aus dem Druck im Inneren des Luftkissens (27) resultiert, wobei dieser Druck nominal ist.

2. Wartungsverfahren nach Anspruch 1, wobei die Wiege (9) mehrere Trägerorgane (19) des Förderbands (3) umfasst, wobei der Wartungsvorgang den Ersatz von mindestens einem der Trägerorgane (19) umfasst.

3. Wartungsverfahren nach einem der vorherigen Ansprüche, wobei das Luftkissen (27) durch einen Lüfter (29) aufgeblasen wird.

4. Wartungsverfahren nach Anspruch 3, wobei der Airbag (27) und das Gebläse (29) auf einem Rahmen (33) montiert sind und somit eine einteilige, tragbare Unterbaugruppe bilden.

5. Wartungsverfahren nach einem der vorherigen Ansprüche, wobei das Luftkissen (27) in dem aufgeblasenen Zustand einen Druck zwischen 1 bar absolut und 3 bar absolut aufweist.

6. Wartungsverfahren nach einem der vorherigen Ansprüche, wobei der Bandförderer (2) einen Förderrahmen (17) umfasst, wobei das Luftkissen (27) in einer angehobenen Position an dem Förderrahmen (17) montiert ist.

7. Anordnung (1), umfassend:
- einen Bandförderer (2), umfassend ein längsgerichtetes Förderband (3) und eine Vielzahl von Trägerstationen (5) des Förderbands (3), die entlang des Förderbands (3) verteilt sind, jede Trägerstation (5) umfassend eine Wiege (9), auf der das Förderband (3) mit einer Trägerfläche (23) aufliegt; und
- eine Wartungsvorrichtung (25) des Bandförderers (2), die Wartungsvorrichtung (25) umfassend:
- ein Luftkissen (27), das wahlweise einen entleerten Zustand und einen aufgeblasenen Zustand annehmen kann;
- ein Aufblasorgan (29), das angeordnet ist, um das Luftkissen (27) in seinen aufgeblasenen Zustand aufzublasen;
das Luftkissen (27) konfiguriert ist, um in dem nicht aufgeblasenen Zustand unter das Förderband (3) in eine Hebeposition in der Nähe einer der Trägerstationen (5) eingefügt zu werden;
das Luftkissen (27) konfiguriert ist, um in der Hebeposition und in dem aufgeblasenen Zustand das Förderband (3) anzuheben, sodass das Förderband (3) direkt auf dem Luftkissen (27) aufliegt und nicht mehr auf der Wiege (9) der Trägerstation (5) aufliegt;
wobei die Trägerfläche (23) im Querschnitt eine bestimmte Form aufweist, wenn das Förderband (3) auf der Wiege (9) der Trägerstation (5) aufliegt, wobei das Luftkissen (27) eine Auflagefläche (31) aufweist, die bereitgestellt ist, um in dem aufgeblasenen Zustand gegen das Förderband (3) zu drücken,
**dadurch gekennzeichnet, dass** die Auflagefläche (31) im aufgeblasenen Zustand bei fehlender Beanspruchung den bestimmten Querschnitt aufweist, wobei der bei fehlender Beanspruchung bestimmte Querschnitt der Querschnitt der Auflagefläche (31) ist, wenn keine äußere Kraft auf das Luftkissen (27) ausgeübt wird, wobei die Form der Auflagefläche (31) nur aus dem Druck im Inneren des Luftkissens (27) resultiert, wobei dieser Druck nominal ist.

8. Anordnung nach Anspruch 7, wobei die Wartungsvorrichtung (25) einen Rahmen (33) umfasst, an dem das Luftkissen (27) und das Aufblasorgan (29) montiert sind, wodurch eine einteilige, tragbare Teilanordnung gebildet ist.

## Claims

1. A belt conveyor (2) maintenance process comprising a longitudinal conveyor belt (3) and a plurality of support stations (5) for the conveyor belt (3) distributed along the conveyor belt (3), each support station (5) comprising a cradle (9) on which the conveyor belt (5) rests by a support surface (23), the process comprising the following steps:
- inserting an inflatable pad (27) in a deflated state below the conveyor belt (3), in a lifting position near one of the support stations (5);
- inflating the inflatable pad (27) to an inflated state in which the conveyor belt (3) rests directly on the inflatable pad (27) and no longer rests on the cradle (9) of said support station (5);
- performing a maintenance operation on said support station (5);
- deflating the inflatable pad (27) to its deflated state;
said support surface (23) having, in cross-section, a determined shape when the conveyor belt (3) rests on the cradle (9) of said support station (5), the inflatable pad (27) having a bearing surface (31) provided to bear against the conveyor belt (3) in the inflated state,
**characterized in that** said bearing surface (31) has, in the inflated state, in the absence of any stress, said determined section, said determined section in the absence of any stress being the section of the bearing surface (31) when no outside force is applied to the inflatable pad (27), the shape of the bearing surface (31) resulting solely from the pressure inside the inflatable pad (27), this pressure being nominal.

2. The maintenance process according to claim 1, wherein the cradle (9) comprises several support members (19) of the conveyor belt (3), the maintenance operation comprising the replacement of at least one of the support members (19).

3. The maintenance process according to any one of the preceding claims, wherein the inflatable pad (27) is inflated by a fan (29).

4. The maintenance process according to claim 3, wherein the inflatable pad (27) and the fan (29) are mounted on a chassis (33) and thus form a single-piece portable subassembly.

5. The maintenance process according to any one of the preceding claims, wherein the inflatable pad (27), in the inflated state, has a pressure of between 1 absolute bar and 3 absolute bars.

6. The maintenance process according to any one of the preceding claims, wherein the conveyor belt (2) comprises a conveyor chassis (17), the inflatable pad (27) being mounted on the conveyor chassis (17) in the lifting position.

7. An assembly (1), comprising:
- a belt conveyor (2) comprising a longitudinal conveyor belt (3) and a plurality of support stations (5) for the conveyor belt (3) distributed along the conveyor belt (3), each support station (5) comprising a cradle (9) on which the conveyor belt (3) rests by a support surface (23); and
- a maintenance device (25) of the conveyor belt (2), the maintenance device (25) comprising:
- an inflatable pad (27) capable of selectively adopting a deflated state and an inflated state;
- an inflation member (29), arranged so as to inflate the inflatable pad (27) to its inflated state;
the inflatable pad (27) being configured in order, in the inflated state, to be inserted below the conveyor belt (3) in a lifting position near one of the support stations (5);
the inflatable pad (27) being configured in order, in the lifting position and in the inflated state, to lift the conveyor belt (3) such that the conveyor belt (3) rests directly on the inflatable pad (27) and no longer rests on the cradle (9) of said support station (5);
said support surface (23) having, in cross-section, a determined shape when the conveyor belt (3) rests on the cradle (9) of said support station (5), the inflatable pad (27) having a bearing surface (31) provided to bear against the conveyor belt (3) in the inflated state,
**characterized in that** said bearing surface (31) has, in the inflated state, in the absence of any stress, said determined section, said determined section in the absence of any stress being the section of the bearing surface (31) when no outside force is applied to the inflatable pad (27), the shape of the bearing surface (31) resulting solely from the pressure inside the inflatable pad (27), this pressure being nominal..

8. The maintenance device according to claim 7, wherein the maintenance device (25) comprises a chassis (33) on which the inflatable pad (27) and the inflation member (29), are mounted, thus forming a single-piece portable subassembly.
